Europäisches Patentamt

European Patent Office

Office européen des brevets

(11) Veröffentlichungsnummer : **0 140 177 B1**

(12) **EUROPÄISCHE PATENTSCHRIFT**

(45) Veröffentlichungstag der Patentschrift :
17.05.89

(51) Int. Cl.⁴ : **B 60 N 1/06, A 47 C 7/40**

(21) Anmeldenummer : 84111635.3

(22) Anmeldetag : 28.09.84

(54) **Fahrzeugsitz.**

(30) Priorität : 19.10.83 DE 3337910

(43) Veröffentlichungstag der Anmeldung :
08.05.85 Patentblatt 85/19

(45) Bekanntmachung des Hinweises auf die Patenterteilung : 17.05.89 Patentblatt 89/20

(84) Benannte Vertragsstaaten :
FR GB IT

(56) Entgegenhaltungen :
DE--A-- 2 265 216
FR--A-- 2 515 946

(73) Patentinhaber : KEIPER RECARO GmbH & Co.
Büchelstrasse 54-58
D-5630 Remscheid 14 (DE)

(72) Erfinder : Göldner, Walther, Dipl.-Ing.
Fichtenweg 7
D-7306 Denkendorf (DE)

(74) Vertreter : Patentanwälte Phys. Bartels Dipl.-Ing. Fink
Dr.-Ing. Held
Lange Strasse 51
D-7000 Stuttgart 1 (DE)

EP 0 140 177 B1

## Beschreibung

Die Erfindung betrifft einen Fahrzeugsitz, der die Merkmale des Oberbegriffs des Anspruchs 1 aufweist.

Bei einem bekannten Fahrzeugsitz dieser Art (DE-A 22 65 216) sind zwei Arme, die fest mit den Längsholmen der Rückenlehne verbunden sind und über diese nach unten und nach vorne überstehen, über je ein Verstellelement schwenkbar mit dem Sitzgestell verbunden. Im unteren Endabschnitt der Rückenlehne ist an der Vorderseite der zwischen den beiden Längsholmen vorgesehenen Platte ein sich von einem zum anderen Längsholm erstreckender Versteifungskörper vorgesehen, der sowohl mit den Seitenholmen als auch der Platte verbunden ist und dessen Querschnittsprofil nach hinten hin offen ist.

Der Erfindung liegt die Aufgabe zugrunde, einen Fahrzeugsitz zu schaffen, dessen Rückenlehne eine verbesserte Verwindungssteifigkeit bei zumindest ebenso günstigem Verhältnis von Gewicht zu Verwindungssteifigkeit aufweist.

Diese Aufgabe löst ein Fahrzeugsitz mit den Merkmalen des Anspruches 1.

Durch die erfindungsgemäße Anordnung der das Verschwenken der Rückenlehne ermöglichenden, torsionssteifen Querachse innerhalb des Versteifungskörpers wird die Verwindungssteifigkeit der Rückenlehne erhöht, da neben dem Versteifungskörper auch die torsionssteife Querachse entsprechende Verwindungskräfte aufnehmen kann. Vorteilhaft ist ferner, daß der Versteifungskörper als Abdeckung die Querachse abdeckt und so vor Verletzungen an der Querachse bei einem etwaigen Aufprall schützt und der Versteifungskörper eine ausreichend große Aufprallfläche bilden kann, aus der keine Kanten hervorstehen. Außerdem kann bei einem etwaigen Aufprall der Versteifungskörper sich verformen, ohne mit offenliegenden Kanten bei einer hinten sitzenden Person Fußverletzungen herbeizuführen. Somit ist es nicht störend, daß die Querachse hinter der Platte angeordnet ist, um keinen Platz in dem für das Polster erforderlichen Raum vor der Platte zu benötigen.

Der Versteifungskörper kann zwar aus einem handelsüblichen Profilstab bestehen. Vorzugsweise ist er jedoch ein Blechkörper, da hierdurch trotz geringer Kosten die Form, insbesondere die Querschnittsform, auf die Erfordernisse abgestimmt werden kann, was zu einem optimalen Verhältnis von Gewicht zu Versteifungswirkung führt. Bei einem derartigen Blechkörper können beispielsweise unterschiedliche Profilformen in einzelnen Abschnitten vorgesehen werden, um beispielsweise in den Endabschnitten einen Antrieb für den Gelenkbeschlag unterbringen und im Mittelabschnitt den Raumbedarf auf einem Minimum halten zu können. Ferner erlaubt ein Blechkörper ohne besonderen Aufwand, Verbindungsteile vorzusehen, mittels deren eine problemlose Verbindung mit den übrigen Bauelementen, insbesondere den Längsholmen, möglich ist. Bei einer bevorzugten Ausführungsform hat der Versteifungskörper ein im wesentlichen U-förmiges Profil mit flanschartigen Anlage- und Verbindungsstreifen in Längsrichtung. Ein derartiges Profil hat auch den Vorteil, daß die Querachse in dessen zusammen mit der Platte gebildeten Hohlraum verlaufen kann. Es kommen aber auch andere Querschnittsformen in Frage.

Ein aus Blech hergestellter Versteifungskörper ermöglicht auch ohne wesentlichen Mehraufwand, zum punktförmigen Verschweißen mit den Längsholmen an beiden Enden Flanschteile oder Lappen vorzusehen, sowie in Längsrichtung im Abstand voneinander Vertiefungen zum punktförmigen Verschweißen mit der Platte sowie zur Erhöhung der Steifigkeit einzuformen.

Der Versteifungskörper kann auch einstückig mit der Platte ausgebildet sein.

Im folgenden ist die Erfindung anhand von einem in der Zeichnung dargestellten Ausführungsbeispiel im einzelnen erläutert. Es zeigen :

Fig. 1 eine Vorderansicht des Polsterträgers der Rückenlehne des Ausführungsbeispiels,

Fig. 2 einen Längsschnitt des Ausführungsbeispiels nach der Linie II-II in Fig. 1,

Fig. 3 eine Seitenansicht des Versteifungskörpers des Ausführungsbeispiels in größerem Maßstab,

Fig. 4 eine unvollständig dargestellte Vorderansicht des Versteifungskörpers des Ausführungsbeispiels in größerem Maßstab.

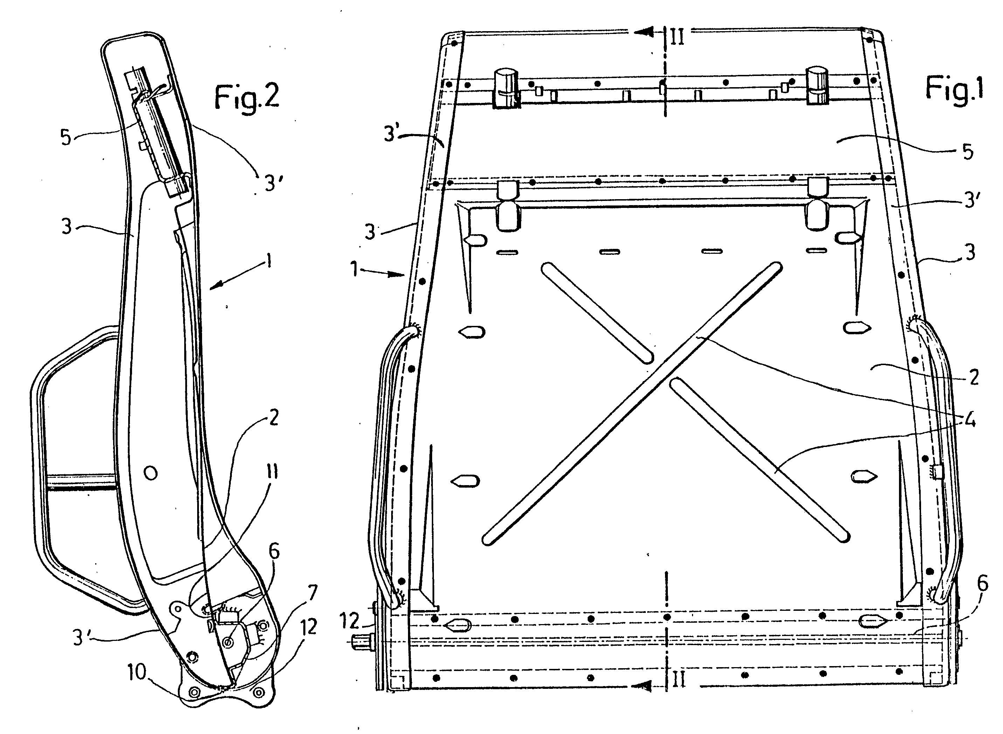

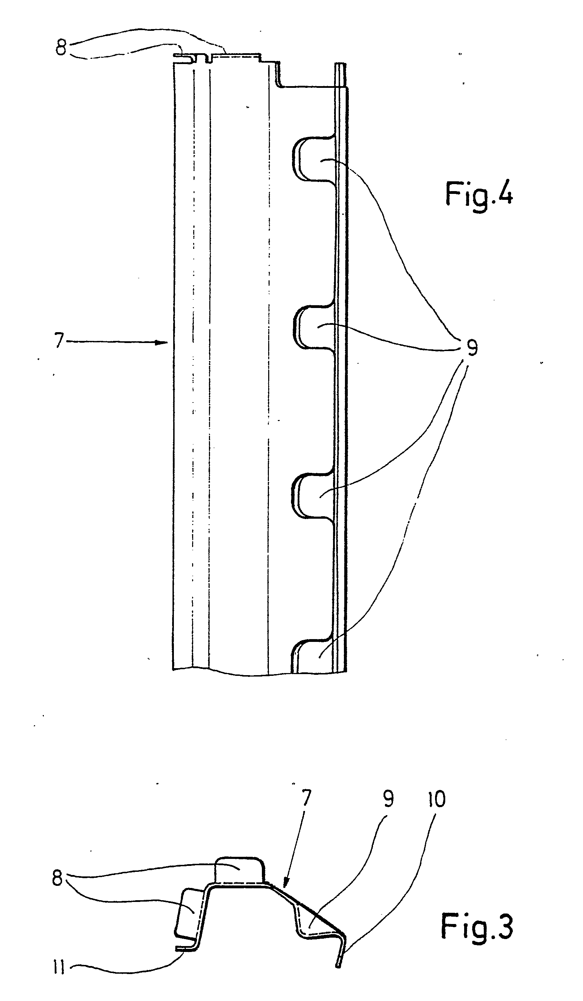

Ein in den Fig. 1 und 2 dargestellter Polsterträger 1 einer Rükkenlehne eines Kraftfahrzeugsitzes weist eine Platte 2 aus einem dünnen Stahlblech sowie zwei spiegelbildlich gleiche Längsholme 3 auf, die ebenfalls aus Stahlblech bestehen. Um den Längsholmen 3 die notwendige Steifigkeit zu geben, haben sie einen hochgestellten, im wesentlichen über den gesamten Umfang umlaufenden Rand 3' sowie in ihrem Mittelabschnitt eine breite in Längsrichtung verlaufende Sicke. Die Platte 2 ist an ihren Längsseiten mit den beiden Längsholmen 3 punktverschweißt. Sie liegt dabei mit Ausnahme ihres unteren Drittels an den hinteren hochgestellten Rändern 3' der Längsholme 3 an. Die Platte 2, die in ihrem mittleren Bereich zwei diagonal verlaufende Versteifungssicken 4 aufweist, trägt in ihrem oberen Bereich eine siche von einem zum anderen Längsholm 3 erstreckende Traverse 5 mit Halterungen für eine Kopfstütze. Das untere Ende der beiden Längsholme 3 ist mit je einem Gelenkbeschlag 12 fest verbunden. Eine zur Schwenkachse der Rückenlehne konzentrisch angeordnete, durch ein Rohr gebildete, torsionssteife Querachse 6 hat die Aufgabe, eine Schwenkbewegung des mit dem Längsholm verbundenen Beschlagteils des einen Beschlages oder ein auf diesen Beschlagteil einwirkendes Drehmoment auf den entsprechenden Beschlagteil des anderen Gelenkbeschlages zu übertragen. Parallel zur Querachse 6 ist ein Versteifungskörper 7 so angeordnet, daß die Querachse 6 in

dem von ihm und der Platte 2 begrenzten Hohlraum liegt. Der aus Stahlblech geformte Versteifungskörper 7 hat die Aufgabe, die Verwindungssteifigkeit des Polsterträgers 1 zu erhöhen..Er hat deshalb, wie die Fig. 2 und 3 zeigen, einen polygonalen, im wesentlichen U-artigen Querschnitt. Im Ausführungsbeispiel schließt der obenliegende, kürzere Schenkel mit dem Jochabschnitt einen Winkel von etwas mehr als 90° ein, wohingegen der Winkel zwischen dem Jochabschnitt und dem untenliegenden, längeren Schenkel bei 135° liegt. An seinen beiden Endlfächen sind Lappen 8 angeformt, die an den Längsholmen 3 anliegen und mit diesen verschweißt sind. An die beiden Schenkel des Versteifungskörpers 7 schließen sich außenliegende, abgebogene Flanschteile 10 bzw. 11 an, die sich in Längsrichtung über die ganze Länge des Versteifungskörpers 7 erstrecken. Der eine Flanschteil 10 übergreift den unteren Querrand der Platte 2 und liegt, wie Fig. 2 zeigt, am hochgestellten Rand 3' der beiden Längsholme 3 an, mit dem er verschweißt ist. Der andere Flanschteil 11 liegt an der Rückseite der Platte 2 an, mit der er punktverschweißt ist.

In dem den Flanschteil 10 tragenden Schenkel weist der Versteifungskörper 7 eingeformte Vertiefungen 9 mit jeweils gleichem V-förmigem Querschnitt und gleicher Breite auf, die in Längsrichtung im Abstand voneinander angeordnet sind, zur Erhöhung der Steifigkeit des Versteifungskörpers 7 und zur Bildung von dem Flanschteil 10 benachbarten Anlageflächen dienen, die an der Platte 2 anliegen und mit ihr punktverschweißt sind.

**Patentansprüche**

1. Fahrzeugsitz mit einer um eine Querachse (6) relativ zum Sitzteil verschwenkbaren Rückenlehne, deren Polsterträger (1) zwei ihn seitlich begrenzende Längsholme (3) und eine dünne Platte (2) aufweist, die längs ihrer beiden seitlichen Randzonen (3') fest mit den beiden Längsholmen (3) verbunden ist, wobei die Platte (2) in dem der Querachse (6) benachbarten Endabschnitt einen sich in Querrichtung der Rückenlehne erstreckenden Versteifungskörper (7) aufweist, dadurch gekennzeichnet, daß der Versteifungskörper (7) als Abdeckung für die zwischen ihm und der dünnen Platte (2) liegende, torsionssteife Querachse (6) ausgebildet und hinter der dünnen Platte (2) angeordnet ist.

2. Fahrzeugsitz nach Anspruch 1, dadurch gekennzeichnet, daß der Versteifungskörper (7) ein Blechkörper ist.

3. Fahrzeugsitz nach Anspruch 2, gekennzeichnet durch unterschiedliche Profilformen des Versteifungskörpers (7) in in Längsrichtung aufeinanderfolgenden Abschnitten.

4. Fahrzeugsitz nach einem der Ansprüche 1 bis 3, dadurch gekennzeichnet, daß der Versteifungkörper (7) einstückig mit der Platte (2) ausgebildet ist.

5. Fahrzeugsitz nach einem der Ansprüche 1 bis 3, dadurch gekennzeichnet, daß der Versteifungskörper (7) zumindest auf einem Teil seiner Länge fest mit der Platte (2) verbunden ist.

6. Fahrzeugsitz nach einem der Ansprüche 1 bis 5, dadurch gekennzeichnet, daß der Versteifungskörper (7) mit den Längsholmen (3) fest verbunden ist.

7. Fahrzeugsitz nach einem der Ansprüche 1 bis 6, dadurch gekennzeichnet, daß der Versteifungskörper (7) in seiner Längsrichtung im Abstand nebeneinander eingeformte Vertiefungen (9) aufweist.

8. Fahrzeugsitz nach einem der Ansprüche 1 bis 7, dadurch gekennzeichnet, daß der Versteifungskörper (7) in seinen beiden Endabschnitten ein anderes Querschnittsprofil und/oder eine andere Querschnittsgröße als in dem dazwischenliegenden Abschnitt hat.

9. Fahrzeugsitz nach einem der Ansprüche 1 bis 8, dadurch gekennzeichnet, daß der Versteifungskörper (7) ein U-artiges Profil aufweist, an dessen beiden Schenkeln sich in Längsrichtung Flanschteile (10, 11) anschließen.

10. Fahrzeugsitz nach einem der Ansprüche 1 bis 9, dadurch gekennzeichnet, daß der Versteifungskörper (7) an seinen beiden Enden Lappen (8) aufweist, die mit den Längsholmen (3) verschweißt sind.

**Claims**

1. A vehicle seat having, pivotable about a transverse spindle (6) in relation to the seat part, a back rest of which the padding support (1) comprises, bounding it laterally, two longitudinal members (3) and a thin plate (2) connected rigidly to the two longitudinal members (3) along its two lateral marginal zones (3'), the plate (2) comprising in its end portion adjacent the transverse spindle (6) a stiffening member (7) extending in the transverse direction of the back rest, characterised in that the stiffening member (7) is constructed as a covering for the torsion-resistant transverse spindle (6) disposed between it and the thin plate (2), behind which it is disposed.

2. A vehicle seat according to Claim 1, characterised in that the stiffening member (7) is made from sheet metal.

3. A vehicle seat according to Claim 2, characterised by different profile forms of stiffening member (7) in longitudinally consecutive portions.

4. A vehicle seat according to one of Claims 1 to 3, characterised in that the stiffening member (7) is constructed in one piece with the plate (2).

5. A vehicle seat according to one of Claims 1 to 3, characterised in that the stiffening member (7) is, over at least a part of its length, rigidly connected to the plate (2).

6. A vehicle seat according to one of Claims 1 to 5, characterised in that the stiffening member (7) is rigidly connected to the longitudinal members (3).

7. A vehicle seat according to one of Claims 1 to 6, characterised in that the stiffening member (7) comprises, extending in its longitudinal direction, spaced apart adjacent and integrally formed depressions (9).

8. A vehicle seat according to one of Claims 1 to 7, characterised in that the stiffening member (7) has in its two end portions a different cross-sectional profile and/or a different cross-sectional size than in the portion between the two ends.

9. A vehicle seat according to one of Claims 1 to 8, characterised in that the stiffening member (7) comprises a U-shaped profile adjacent the two arms of which there are longitudinal flange parts (10, 11).

10. A vehicle seat according to one of Claims 1 to 9, characterised in that the stiffening member (7) has at its two ends lugs (8) which are welded to the longitudinal members (3).

**Revendications**

1. Siège de véhicule comportant un dossier qui peut pivoter autour d'un axe transversal (6) relativement à l'assise et dont le porte-rembourrage (1) présente deux longerons (3) qui le limitent latéralement et un panneau mince (2) qui est solidarisé, le long de ses deux zones de bordure latérales (3'), avec les deux longerons (3), étant précisé que le panneau (2) présente, dans le tronçon d'extrémité voisin de l'axe transversal (6), un organe de renfort (7) qui s'étend dans la direction transversale du dossier, caractérisé en ce que l'organe de renfort (7) est conçu comme capot pour l'axe transversal (6), rigide en torsion et situé entre cet organe de renfort et le panneau mince (2), et est disposé derrière le panneau mince (2).

2. Siège de véhicule selon la revendication 1, caractérisé en ce que l'organe de renfort (7) est un organe en tôle.

3. Siège de véhicule selon la revendication 2, caractérisé par des formes de profil différentes de l'organe de renfort (7) dans des tronçons successifs dans la direction longitudinale.

4. Siège de véhicule selon l'une des revendications 1 à 3, caractérisé en ce que l'organe de renfort (7) est conçu d'une pièce avec le panneau (2).

5. Siège de véhicule selon l'une des revendications 1 à 3, caractérisé en ce que l'organe de renfort (7) est solidarisé, au moins sur une partie de sa longueur, avec le panneau (2).

6. Siège de véhicule selon l'une des revendications 1 à 5, caractérisé en ce que l'organe de renfort (7) est solidarisé avec les longerons (3).

7. Siège de véhicule selon l'une des revendications 1 à 6, caractérisé en ce que l'organe de renfort (7) présente des emboutis en creux (9) disposés les uns à côtés des autres à une certaine distance l'une de l'autre dans sa direction longitudinale.

8. Siège de véhicule selon l'une des revendications 1 à 7, caractérisé en ce que l'organe de renfort (7) présente, dans ses deux tronçons d'extrémité, un autre profil de section et/ou une autre dimension de section que dans le tronçon intermédiaire entre eux.

9. Siège de véhicule selon l'une des revendications 1 à 8, caractérisé en ce que l'organe de renfort (7) présente un profil en forme de U aux deux ailes duquel des rebords (10, 11) se raccordent en direction longitudinale.

10. Siège de véhicule selon l'une des revendications 1 à 9, caractérisé en ce que l'organe de renfort (7) présente à ses deux extrémités des pattes (8) qui sont soudées avec les longerons (3).

Fig.1

Fig.2

**EP 0 140 177 B1**

Fig.4

Fig.3

2